# EUROPEAN PATENT APPLICATION

(11) **EP 2 105 067 A1**
(43) Date of publication of application: **30.09.2009**
(21) Application number: 07828418.9
(22) Date of filing: 26.09.2007
(51) Int. Cl.: A47C 1/023, B60N 2/02

(54) **SEAT STRUCTURE**

(30) Priority: 19.01.2007 JP 2007010450
(71) Applicant: Delta Tooling Co., Ltd., Akiku, Hiroshima-shi Hiroshima 736-0084 (JP)
(72) Inventor: SAKAMOTO, Yutaka, Hiroshima-shi Hiroshima 736-0084 (JP)
(74) Representative: HOFFMANN EITLE
(86) International application number: PCT/JP2007/068645
(87) International publication number: WO 2008/087770

(57) **Abstract**

There is provided a seat structure applicable to both a normal posture and a comfortable posture, in which a sufficiently relaxed resting posture is available and an excellent comfort is obtained while seated. A cushion frame 30 is supported by a rear link plate 41 and a front link plate 42, in which it is set such that the rear link plate 41 within its movable range has a displacement angle larger than a displacement angle of the front link plate 42, and an angle between a side frame portion 12b of a base frame 10 and the rear link plate 41 becomes smaller than an angle between the side frame portion and the front link plate 42 when the plates are rotated and moved to the forward-most positions. Consequently, a seating surface angle of the cushion frame 30 increases as the rear link plate 41 and the front link plate 42 are rotated and moved forward. It is structured such that an inclination angle of a back frame 20 itself does not vary but the seating surface angle of the cushion frame 30 can be varied according to a movement of a person.

## Description

### Technical Field

The present invention relates to a seat structure applicable to transportation devices such as aircrafts, trains, ships, forklifts and vehicles, or various theaters such as movie theaters in which the seats are provided, and particularly relates to a seat structure of aircrafts, trains, and various theaters in which plural seats are aligned in a longitudinal direction to provide a seating space (leg room space) which is wider than a conventional seating space.

### Background Art

In an aircraft, for example, a number of seats are continuously provided in a longitudinal direction to arrange a predetermined number of seats in a limited space. The seating space of each passenger is thus limited to be a predetermined size. In particular, there has been a problem that, when a passenger in a front seat reclines a seat back to take a resting posture, the leg room (footrest) space of a passenger in a rear seat is significantly limited and this causes deterioration in comfort. In view of this problem, in such an aircraft, an effort has been required to maintain a wider seating space including the leg room (footrest) space between the front seat and the rear seat to improve passengers' comfort.

### Disclosure of the Invention

### Problem to be solved by the Invention

The present invention has been made in view of the above problem, and an object thereof is to provide a seat structure applicable to both a normal posture and a resting posture, in which a sufficiently relaxed resting posture is available, an excellent comfort is obtained while seated, and, even in the resting posture, it does not limit a seating space including a leg room space of a rear seat.

### Means to solve the Problem

In order to solve the aforementioned problem, a seat structure according to the present invention is a seat structure having a back frame and a cushion frame. The back frame is disposed in a state of being fixed at a predetermined inclination angle, and the cushion frame is supported to a base frame with a link mechanism. The link mechanism has a rotation center portion axially supported to a side frame portion of the base frame positioned on a side portion of the cushion frame in a rotatable manner, and a cushion frame connecting portion to which the cushion frame is connected, and is provided with a rear link plate and a front link plate respectively disposed on a rearward side and on a forward side along the side frame portion with a predetermined interval therebetween. When displacement angles between respective virtual lines each connecting the rotation center portion and the cushion frame connecting portion when the rear link plate and the front link plate are rotated and moved to the rearward-most positions and when they are rotated and moved to the forward-most positions within their movable ranges are compared, the rear link plate is set to have the displacement angle larger than the displacement angle of the front link plate, an angle between the side frame portion and the rear link plate is set to be smaller than an angle between the side frame portion and the front link plate when the plates are rotated and moved to the forward-most positions, and a seating surface angle of the cushion increases as the rear link plate and the front link plate are rotated and moved forward.
It is preferable that the rear link plate is provided with an actuator connecting portion in which the rear link plate is rotated and moved by the actuator.
Preferably, the rear link plate has a shape having a substantially dogleg-shaped piece portion formed to project forward and upward from the rotation center portion and an operation piece portion positioned on the rearward side of the substantially dogleg-shaped piece portion with a predetermined interval therebetween and extending upward from the rotation center portion, in which the cushion frame connecting portion is formed on the substantially dogleg-shaped piece portion and the actuator connecting portion is formed on the operation piece portion.
It is preferable that the actuator has a piston provided to be movable back and forth with respect to a cylinder, and either of the cylinder and a piston rod of the piston is connected to the side frame portion of the base frame and the other one is connected to the actuator connecting portion of the rear link plate, in which when the piston rod moves in a direction in which it is extended with respect to the cylinder, it pushes the operation piece portion of the rear link plate rearward to rotate and move the cushion frame connecting portion of the substantially dogleg-shaped piece portion of the rear link plate rearward, and when the piston rod moves in a direction in which it is compressed into the cylinder, it rotates and moves the operation piece portion of the rear link plate forward to rotate and move the cushion frame connecting portion of the substantially dogleg-shaped piece portion of the rear link plate forward.
Note that the seating surface angle of the cushion frame is preferably set to fall within a range of 22 to 28 degrees at maximum and 12 to 15 degrees at minimum.

### Effect of the Invention

According to a seat structure of the present invention, a cushion frame is supported by a rear link plate and a front link plate, in which it is set such that the rear link plate within its movable range has a displacement angle larger than a displacement angle of the front link plate, and an angle between a side frame portion of a base frame and the rear link plate becomes smaller than an angle between the side frame portion and the front link plate when the plates are rotated and moved to the forward-most positions. Consequently, a seating surface angle of the cushion frame increases as the rear link plate and the front link plate are rotated and moved forward. In other words, according to the present invention, it is structured such that an inclination angle of a back frame itself does not vary but the seating surface angle of the cushion frame can be varied according to a movement of a person. Therefore, a person's pelvis portion and a portion lower than the pelvis portion can be moved forward without varying a position of a part of his or her back above his or her breast. Accordingly, the same effect of the resting posture, that is, the posture in which the back frame is reclined in a conventional seat structure, can be obtained. Meanwhile, since the position of the back frame supported by the base frame is not varied, a leg room space in a rear seat is not limited even when a resting posture is taken in a front seat within a same space as conventional.

### Brief Description of Drawings

Fig. 1 is a perspective view showing a seat structure according to one embodiment of the present invention seen from the right side;
Fig. 2 is a perspective view of the seat structure according to the aforementioned embodiment seen from the left side;
Fig. 3 is a side view of the seat structure according to the aforementioned embodiment in which a normal posture is taken;
Fig. 4 is a side view of the seat structure according to the aforementioned embodiment in which a comfortable posture is taken;
Fig. 5 is a view to explain a structure of a link mechanism; and
Fig. 6 is a view to explain an operation of the link mechanism.

### Description of the Reference Numerals

- 10: base frame
- 12b: side frame portion
- 20: back frame
- 30: cushion frame
- 31: side member
- 40: link mechanism
- 41: rear link plate
- 411: rotation center portion
- 412: substantially dogleg-shaped piece portion
- 413: operation piece portion
- 414: cushion frame connecting portion
- 415: actuator connecting portion
- 42: front link plate
- 421: rotation center portion
- 424: cushion frame connecting portion
- 50: actuator
- 51: cylinder
- 52: piston rod

### Best Mode for Carrying out the Invention

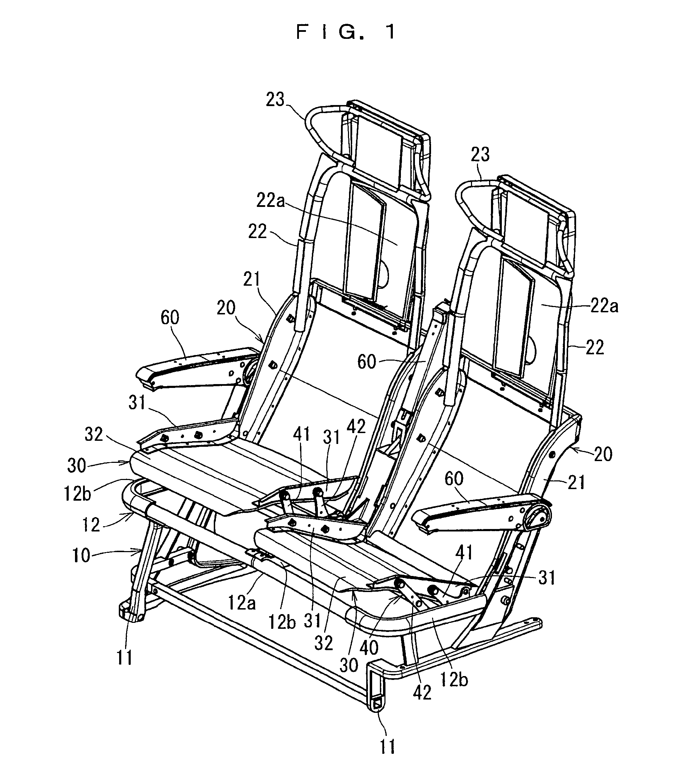

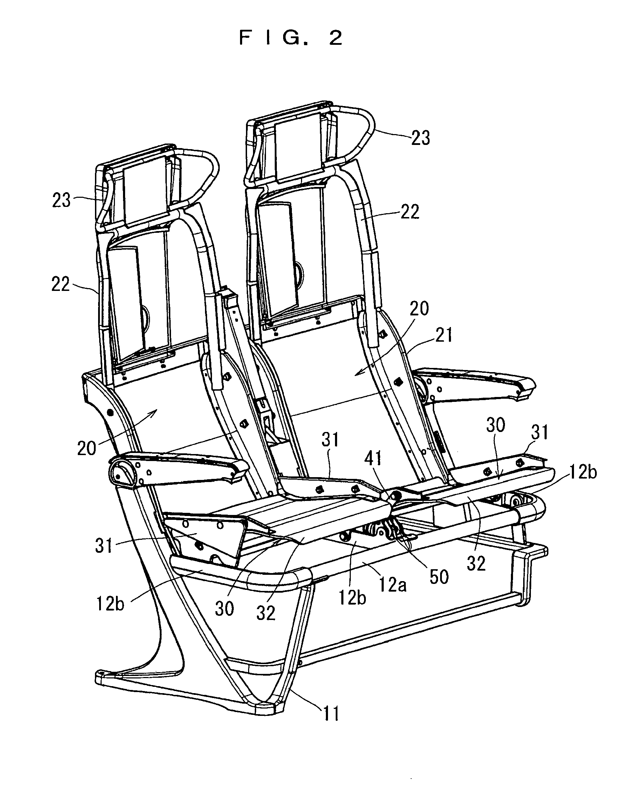

Hereinafter, the present invention will be further specifically described based on an embodiment shown in the drawings. Fig. 1 to Fig. 5 show one embodiment of the present invention. The present embodiment shows a two-seater seat structure in which two sets of back frames 20 and cushion frames 30 are supported by one set of base frame 10.

The base frame 10 is provided on a vehicle body floor of a vehicle (not shown), a floor of a theater such as a movie theater (not shown) or the like. In the present embodiment, the base frame 10 has a leg part 11 fixed to the vehicle body floor or the like, and a support frame 12 provided at a predetermined height from a floor by the leg part 11. The support frame 12 is formed in a substantially U shape, and a front frame 12a between side frame portions 12b at both ends of the support frame 12 has a length along which the two sets of cushion frames 30 can be supported in parallel. Further, on an intermediate portion of the front frame 12a, a side frame portion 12b to be a boundary between the respective cushion frames 30 is formed in parallel with the side frame portions 12b at both ends. Note that as the base frame 10, the one in which the leg part 11 is fixed to the floor, or the leg part 11 is rotatably or movably attached to the floor, can also be applied.

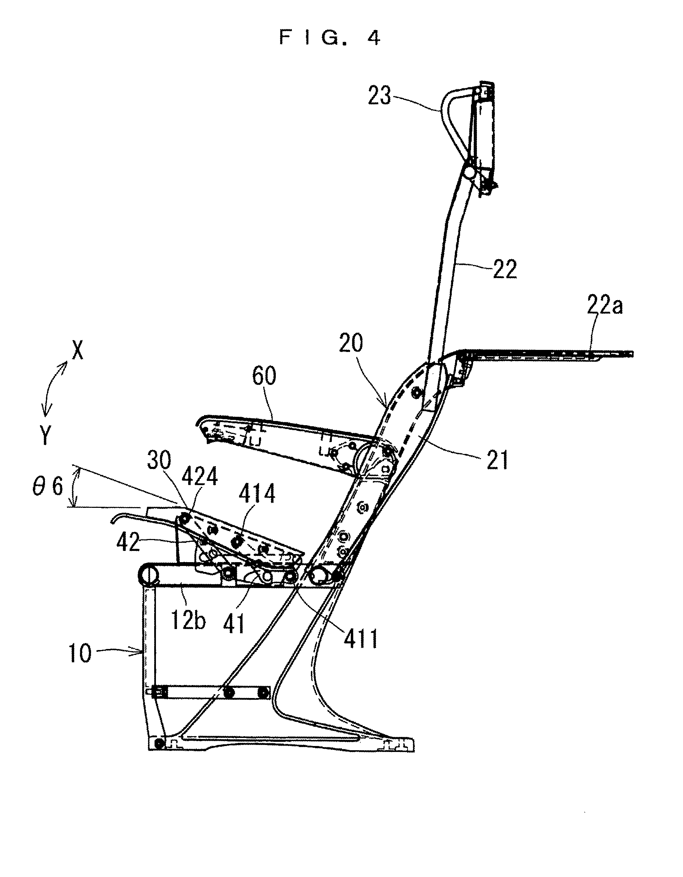

The back frame 20 is provided so as to rise diagonally upward from a rear portion of the support frame 12 of the base frame 10. The back frame 20 is attached at a certain inclination angle so that it does not tilt. Concretely, the back frame 20 of the present embodiment is formed of a lower frame 21 that rises from the support frame 12 and an upper frame 22 that is disposed above the lower frame 21, and further, a headrest support frame 23 is integrally attached to the upper frame 22. Further, a table 22a is supported by the upper frame 22 and, according to need, a person seated in a rear seat can use the table 22a supported by the upper frame 22 of a front seat by pulling the table forward (refer to Fig. 4). Note that it is needless to say that the back frame 20 is provided with an appropriate cushioning member (not shown) by putting up a three-dimensional solid knitted fabric, a two-dimensional net member or the like, or by disposing a urethane member.

The cushion frame 30 is movably supported by the base frame 10 via the link mechanism 40. The cushion frame 30 is formed of a pair of side members 31 disposed to face each other, and a bottom frame member 32 laid between the side members 31, and a cushioning member is supported by these members. For instance, the three-dimensional solid knitted fabric, the two-dimensional net member or the like can be structured as a cushioning member by being put up between the side members 31, and it is also possible to structure such that the urethane member or the like is mounted on the bottom frame member 32.

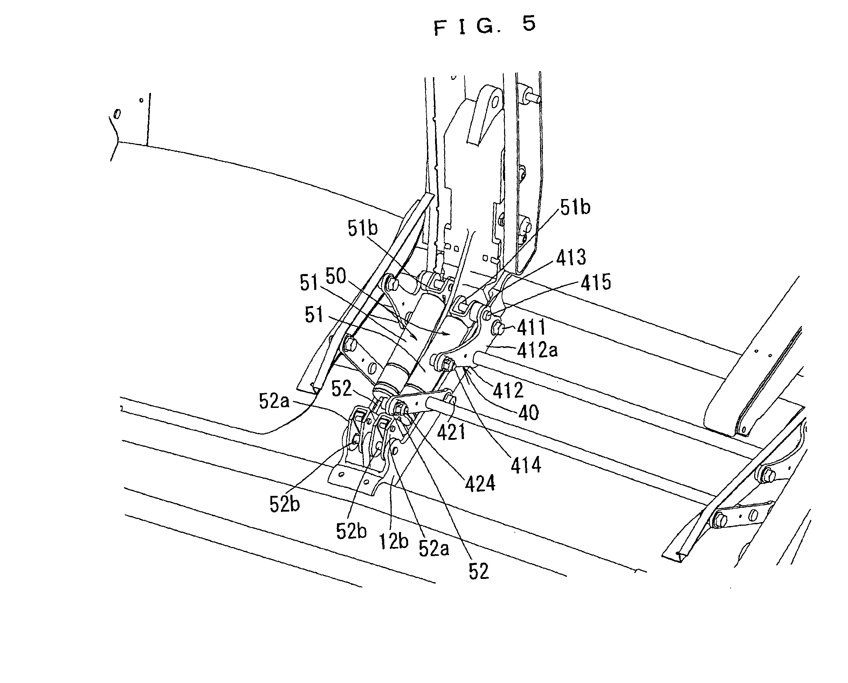

The link mechanism 40 is formed of a rear link plate 41 and a front link plate 42 supported by each side frame portion 12b of the base frame 10. As shown on the right side of Fig. 5 and Fig. 4, if a rotation center portion 411 axially supported to the side frame portion 12b is set as a starting point, the rear link plate 41 is formed in a shape having a substantially dogleg-shaped piece portion 412 extending forward from the rotation center portion 411 and extending diagonally upward from the middle, and an operation piece portion 413 positioned on the rearward side of the substantially dogleg-shaped piece portion 412 with a predetermined interval therebetween and extending upward from the rotation center portion 411, when seen at a posture in which the plate is rotated and moved to the forward-most position. A cushion frame connecting portion 414 connected to the side member 31 of the cushion frame 30 is formed on a tip portion of the substantially dogleg-shaped piece portion 412. Meanwhile, an actuator connecting portion 415 to which a later-described actuator 5 0 is connected is formed on the operation piece portion 413.

The front link plate 42 is formed of a long plate-shaped member, in which one end portion thereof becomes a rotation center portion 421 axially supported to the side frame portion 12b of the base frame 10, and the other end portion thereof becomes a cushion frame connecting portion 424 connected to the side member 31 of the cushion frame 30. The rotation center portion 421 of the front link plate 42 is attached to a place spaced apart by a predetermined interval from the rotation center portion 411 of the rear link plate 41 along the side frame portion 12b.

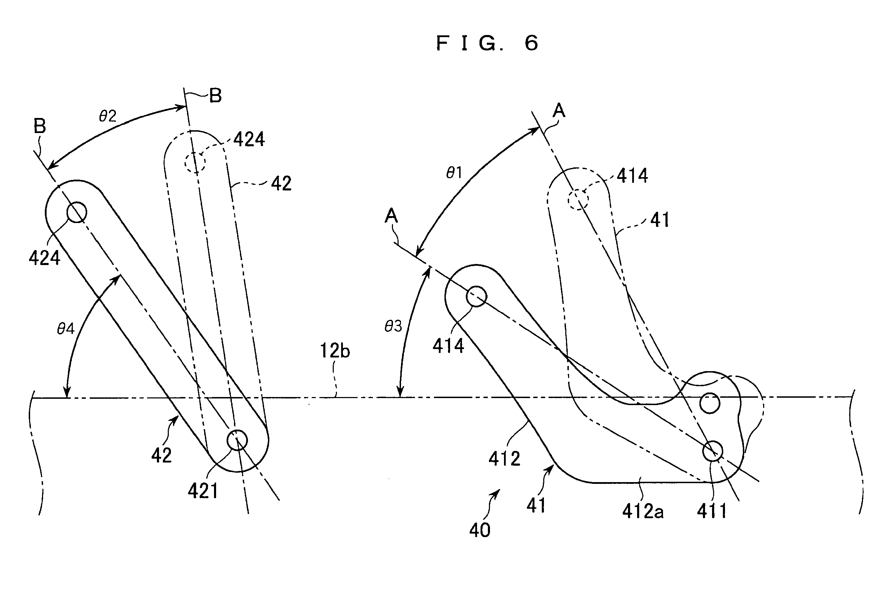

The rear link plate 41 and the front link plate 42 are connected to the side frame portion 12b and the cushion frame 30 so as to have the following relationship. An explanation will be made based on Fig. 6. At first, the plates are attached to the positions at which a displacement angle θ1 when a virtual line A connecting the rotation center portion 411 and the cushion frame connecting portion 414 of the rear link plate 41 is displaced from a state in which the plate is rotated and moved to the rearward-most position within its movable range (state shown by an imaginary line in Fig. 6) to a state in which the plate is rotated and moved to the forward-most position within its movable range (state shown by a solid line in Fig. 6) becomes larger than a displacement angle θ2 of virtual line B connecting the rotation center portion 421 and the cushion frame connecting portion 424 of the front link plate 42 similarly displaced from a state shown by an imaginary line to a state shown by a solid line in Fig. 6. Further, when angles made by the side frame portion 12b and the respective virtual lines A and B in a state in which the rear link plate 41 and the front link plate 42 are rotated and moved to the forward-most positions, namely, in a state shown by a solid line in Fig. 6, are respectively set as θ3 and θ4, the plates are attached so that the angle θ3 becomes smaller than the angle θ4.

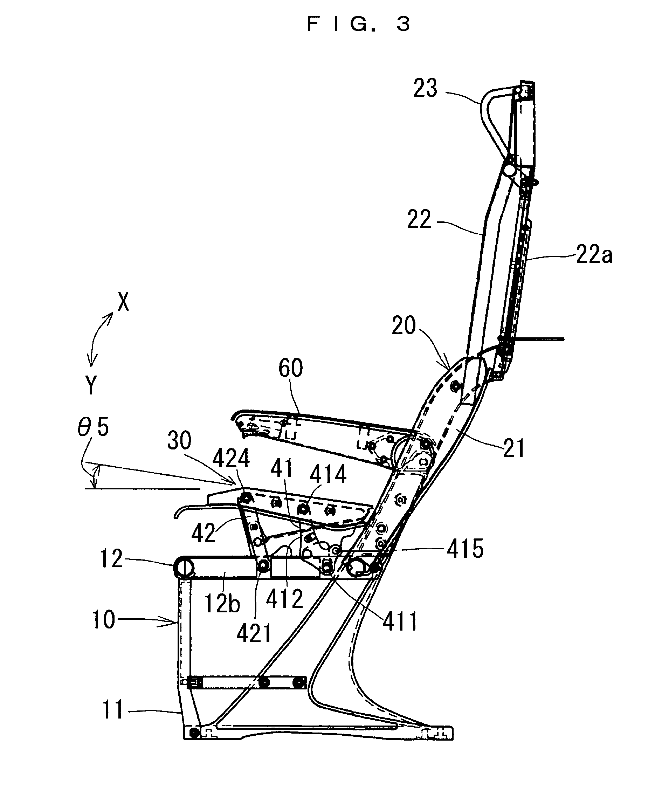

By attaching the plates so as to satisfy the above relationship, in a state of Fig. 3, projection heights from the side frame portion 12b to the respective cushion frame connecting portions 414 and 424 of the rear link plate 41 and the front link plate 42 become substantially the same, which enables to keep a normal posture that is suitable for some light work. Meanwhile, in a state of Fig. 4, the projection height from the side frame portion 12b to the cushion frame connecting portion 424 of the front link plate 42 is higher than that from the side frame portion 12b to the cushion frame connecting portion 414 of the rear link plate 41. As a result, the seating surface angle of the cushion frame 30 becomes larger than that in the state of Fig. 3, which makes it possible to achieve a comfortable posture. Note that a preferred seating surface angle of the cushion frame 30 in the normal posture (namely, the minimum seating surface angle in the present embodiment) 05 is in a range of 12 to 15 degrees, and a preferred seating surface angle in the comfortable posture (namely, the maximum seating surface angle in the present embodiment) 06 is in a range of 22 to 28 degrees. Note that the shapes of the rear link plate 41 and the front link plate 42 are not limited as long as the plates can be attached by satisfying the aforementioned relationship. However, in order to make the displacement angle θ1 of the virtual line A of the rear link plate 41 larger than the displacement angle θ2 of the virtual line B of the front link plate 42, it is preferable to form the rear link plate 41 in a substantially dogleg shape having the portion 412a that extends forward from the rotation center portion 411.

The actuator 50 has a cylinder 51 inside which a piston (not shown) moves back and forth and a piston rod 52 connected to the piston and projecting from the cylinder 51 that has viscous liquid filled therein, and is provided with a damper function that slows a movement of the piston rod 52 when the piston rod moves in a direction in which it is housed inside the cylinder 51. Further, the actuator 50 is also provided with a returning elastic member (not shown) that moves, when a force to move the piston rod 52 in its compression direction is removed, the piston rod 52 in its extension direction. In addition, the actuator 50 is provided with a locking mechanism (not shown), in which it is structured such that when the locking mechanism is in the unlocked state, the piston rod 52 can move in its extension direction or compression direction, and meanwhile, when the locking mechanism is in the locked state, the movement of the piston rod 52 is stopped at the locked position irrespective of the relative position of the piston rod 52 to the cylinder 51. Note that an operation member of the locking mechanism (not shown) is provided in the vicinity of an armrest 60 via a wire (not shown) or the like.

As shown in Fig. 5, a rod connecting member 52a is attached to an end portion of the piston rod 52, and a cylinder connecting member 51a is attached to an end portion of the cylinder 51. Further, in the present embodiment, the rod connecting member 52a is axially supported to the side frame portion 12b of the base frame 10 via a pin member 52b, and the cylinder connecting member 51a is axially supported to the operation piece portion 413 formed on the rear link plate 41 via the actuator connecting portion 415 formed of a pin member. Accordingly, when the piston rod 52 extends relative to the cylinder 51, the operation piece portion 413 is pushed rearward by the cylinder connecting member 51a, resulting that the rear link plate 41 rotates in the X direction shown by an arrow mark in Fig. 3 and Fig. 4 around the rotation center portion 411, and the cushion frame connecting portion 414 rotates and moves to the rearward side from the forward position. When the piston rod 52 is displaced in a direction in which it is pushed into the cylinder 51, the operation piece portion 413 is urged to move forward via the cylinder connecting member 51a. As a result, the rear link plate 41 rotates and moves in a direction in which the cushion frame connecting portion 414 falls forward, namely, in the Y direction shown by an arrow mark in Fig. 3 and Fig. 4 around the rotation center portion 411. Note that the piston rod 52 and the cylinder 51 of the actuator 50 can be disposed in an arbitrary direction, and they can also be disposed in a direction opposite to that of Fig. 5.

An operation of the present embodiment is as follows. At first, it is supposed that a person is seated in a normal posture shown in Fig. 3. In this state, the operation member provided in the vicinity of the armrest 60 is operated to release the lock of the actuator 50. Accordingly, both of the rear link plate 41 and the front link plate 42 rotate in a direction in which they fall forward (Y direction shown by an arrow mark) because of a load of the person. When the rear link plate 41 is moved as above, the operation piece portion 413 is also rotated forward (Y direction shown by an arrow mark), so that the piston rod 52 of the actuator 50 is relatively pushed into the cylinder 51. Since the rear link plate 41 has the substantially dogleg-shaped piece portion 412 as described above, the displacement angle θ1 of the virtual line A is larger than the angle θ2 of the virtual line B of the front link plate 42. For this reason, in a comfortable posture in which the rear link plate 41 and the front link plate 42 ultimately fall to the forward-most positions, the seating surface angle of the cushion frame 30 is larger than that in the case of the normal posture. When the seated person operates the operation member to make the actuator 50 in the locked state again, the cushion frame 30 is fixed while keeping an arbitrary seating surface angle.

Meanwhile, when the posture is returned from the comfortable posture to the normal posture, the operation member in the vicinity of the armrest 60 is operated to release the lock of the actuator 50, and the seated person removes the load applied to the cushion frame 30 by slightly rising from the seat. Accordingly, because of the operation of the returning elastic member of the actuator 50, the operation piece portion 413 of the rear link plate 41 is pushed rearward, resulting that the rear link plate 41 is rotated rearward (X direction shown by an arrow mark) from a state of being fallen forward, around the rotation center portion 411. Accordingly, the forwardly extending portion 412a of the substantially dogleg-shaped piece portion 412 of the rear link plate 41 also rises, so that the seating surface angle of the cushion frame 30 becomes gradually small.

Thus, the seated person can take a comfortable posture similarly to the case that the cushion frame 30 is fixed and the back frame 20 is reclined since the cushion frame 30 is shifted as described above even with the structure that the back frame 20 does not recline rearward. Accordingly, even when plural seat structures 1 of the present embodiment are provided in plural rows, a leg room space of a seated person in a rear seat is fixedly maintained regardless of that a seated person in a front seat is in a normal posture or a comfortable posture.

## Claims

1. A seat structure comprising a back frame and a cushion frame,
wherein the back frame is disposed in a state of being fixed at a predetermined inclination angle, and the cushion frame is supported to a base frame with a link mechanism;
wherein the link mechanism has a rotation center portion axially supported to a side frame portion of the base frame positioned on a side portion of the cushion frame in a rotatable manner, and a cushion frame connecting portion to which the cushion frame is connected, and is provided with a rear link plate and a front link plate respectively disposed on a rearward side and on a forward side along the side frame portion with a predetermined interval therebetween; and
wherein, when displacement angles between respective virtual lines each connecting the rotation center portion and the cushion frame connecting portion when the rear link plate and the front link plate are rotated and moved to the rearward-most positions and when they are rotated and moved to the forward-most positions within their movable ranges are compared, the rear link plate is set to have the displacement angle larger than the displacement angle of the front link plate, an angle between the side frame portion and the rear link plate is set to be smaller than an angle between the side frame portion and the front link plate when the plates are rotated and moved to the forward-most positions, and a seating surface angle of the cushion frame increases as the rear link plate and the front link plate are rotated and moved forward.

2. The seat structure according to claim 1,
wherein the rear link plate is provided with an actuator connecting portion in which the rear link plate is rotated and moved by the actuator.

3. The seat structure according to claim 2,
wherein the rear link plate has a shape having a substantially dogleg-shaped piece portion formed to project forward and upward from the rotation center portion and an operation piece portion positioned on the rearward side of the substantially dogleg-shaped piece portion with a predetermined interval therebetween and extending upward from the rotation center portion, in which the cushion frame connecting portion is formed on the substantially dogleg-shaped piece portion and the actuator connecting portion is formed on the operation piece portion.

4. The seat structure according to any one of claims 1 to 3,
wherein the actuator has a piston provided to be movable back and forth with respect to a cylinder, and either of the cylinder and a piston rod of the piston is connected to the side frame portion of the base frame and the other one is connected to the actuator connecting portion of the rear link plate, in which when the piston rod moves in a direction in which it is extended with respect to the cylinder, it pushes the operation piece portion of the rear link plate rearward to rotate and move the cushion frame connecting portion of the substantially dogleg-shaped piece portion of the rear link plate rearward, and when the piston rod moves in a direction in which it is compressed into the cylinder, it rotates and moves the operation piece portion of the rear link plate forward to rotate and move the cushion frame connecting portion of the substantially dogleg-shaped piece portion of the rear link plate forward.

5. The seat structure according to any one of claims 1 to 4,
wherein the seating surface angle of the cushion frame is set to fall within a range of 22 to 28 degrees at maximum and 12 to 15 degrees at minimum.
